**Europäisches Patentamt**

**European Patent Office**

**Office européen des brevets**

(11) Publication number: **0 326 427 B1**

## EUROPEAN PATENT SPECIFICATION

(45) Date of publication of patent specification:
**31.03.93 Bulletin 93/13**

(51) Int. Cl.$^5$: **B01D 53/14,** C10K 1/14, B01D 61/42

(21) Application number: **89300842.5**

(22) Date of filing: **27.01.89**

(54) **Process for the recovery of alkanolamines from their heat-stable salts formed in alkanolamines sorbent solutions.**

(30) Priority: **29.01.88 US 149777**
**29.01.88 US 149778**

(43) Date of publication of application:
**02.08.89 Bulletin 89/31**

(45) Publication of the grant of the patent:
**31.03.93 Bulletin 93/13**

(84) Designated Contracting States:
**AT CH DE ES FR GB GR IT LI LU NL SE**

(56) References cited:
**EP-A- 0 286 143**

(73) Proprietor: **THE DOW CHEMICAL COMPANY**
**2030 Dow Center Abbott Road P.O. Box 1967**
**Midland Michigan 48640-1967 (US)**

(72) Inventor: **Bedell, Stephen Alan**
**105 Strawberry**
**Lake Jackson Texas 77566 (US)**
Inventor: **Tsai, Susan S. Kuan**
**2471 Woodbury**
**Pearland Texas 77584 (US)**

(74) Representative: **Raynor, John et al**
**W.H. Beck, Greener & Co 7 Stone Buildings**
**Lincoln's Inn**
**London WC2A 3SZ (GB)**

## Description

In the conditioning of natural and synthetic gases to remove acid gases such as hydrogen sulfide, carbon dioxide, carbonyl sulfide and the like, other acids, such as formic, sulfuric, sulfurous, thiocyanic, oxalic, chloric acids, are generally also present. These acids form heat-stable salts with amine sorbents. These salts build up in the amine treating solution and must periodically be removed to maintain the overall efficiency of the amine with respect to regeneration for reuse in the absorbing process. The conventional process for renewal of an amine sorbing solution contaminated with heat-stable salts of the aforestated acids is to transport the amine solution to a caustic treater wherein the salts are decomposed to their respective amine and acid components, wherein the latter is recovered as the alkali salt of the acid. Such processes are time consuming, not readily adaptable to field unit operations on site of the absorber and are relatively expensive, particularly because of the need to transport the solution to be regenerated from the site to a caustic processing plant which to be economically viable must serve several absorber operations.

It has been known for considerable time that amine salts in general and those produced as a result of the gas conditioning of natural and synthetic gases could be regenerated by electrochemical action. For example, Shapiro, US-A- 2,768,945, electrochemically treats a portion or side stream of the thermally regenerated sorbing solution in a cell which separates the anode and cathode compartments from each other by use of a porous diaphragm. The anode is graphite and the cathode is steel. The anolyte is a weak acid and the catholyte is the amine solution. In Kuo et al, US-A- the electrolytic conversion of amine salts of the principle acid gases, such as hydrogen sulfide and carbon dioxide, is described without mention of the effect of such electrochemical conversion of the other heat-stable salts, such as amine formates, thiocyanates, sulfates, sulfites, oxalates, chlorides and the like. Kuo uses a multi-compartment cell having at least one ion exchange resin-water compartment separating end electrode compartments. Also between the electrode compartments are intermediate compartments, which include an acid compartment, a product compartment and a central feed compartment, all defined by ion (cation or anion exchange) permeable membranes between compartments.

Neither of these processes is known to be used today, Shapiro being comparatively more expensive to operate than periodic purging of a portion of the sorbent and replenishment with virgin sorbent, diluting the heat-stable salt concentration to a level where the effect of the presence of the tied up (protonated) amine is minimized. Kuo et al is far too expensive to operate since a multiplicity of cells between electrodes increases the internal resistance of the cell increasing operating costs at least proportionally.

It has now been found that an economical electrochemical cell for reclaiming an amine sorbent comprises a simple two compartment cell employing specific materials of construction. Such an efficient cell comprises (a) an anode that is made or coated with certain transition metals or oxides thereof and is dimensionally stable under the conditions of environment herein described, such as platinum or iridium oxide coated materials; and (b) a single anion exchange membrane separating the anode and cathode compartments, such as comprising quaternized functionalized polymers, particularly such as aminated polystyrene (e.g.; sold under the trademark Ionics by Ionics, Inc. or Ionac, e.g., Ionac MA3475, by Sybron). The materials that may be coated with platinum or iridium oxide are e.g., titanium or tantalum. The cathode may be any suitable material having electroconductivity and stable under the use environment, e.g., porous graphite, nickel and the like.

In one aspect, the invention provides a process for removing heat-stable alkanolamine salts from an alkanolamine sorbent employed in gas conditioning for the removal acid gases a gas stream wherein the said heat-stable salts alkanolamines are formed during thermal regeneration of said alkanolamine sorbent, said process comprising:

(a) feeding the lean regenerated amine sorbent solution produced in the thermal regeneration step of said gas conditioning process, to the cathode compartment of at least one electrochemical cell, as the catholyte; the cell comprising a container, separated by a anion exchange membrane into a cathode compartment, having an electroconductive expanded metal plate cathode connected to a power source and an anode compartment, having an anode similarly connected to a power source, wherein said anode is a platinum coated, platinized or iridium oxide coated electrically conductive metal, said anode compartment containing an aqueous anolyte solution of an alkali metal salt capable of reacting with the anions of said heat-stable salts, and

(b) withdrawing from said cathode compartment a lean sorbent having less concentration of heat-stable salts than the lean sorbent entering said compartment.

In a particular embodiment the invention provides a process for removing heat-stable salts from an alkanolamine sorbent employed in gas conditioning to remove acid gases from natural and synthetic gas streams wherein the said heat-stable salts of alkanolamines, such as formates, sulfites, oxalates, thiocyanates and chlorides are formed during thermal regeneration of said alkanolamine sorbent, said process comprising:

(a) feeding a portion of the lean regenerated amine sorbent solution produced in the thermal regeneration step of said gas conditioning process, to an electrochemical cell or cells, each cell comprising a container, separated by a anion exchange membrane into a cathode compartment, having an electroconductive expanded metal plate cathode connected to a power source and an anode compartment, having an anode similarly connected to a power source, wherein said anode is a platinum coated, platinized or iridium oxide coated electrically conductive metal, stable for at least 5000 hours of use, said anode compartment containing an aqueous anolyte solution of an alkali metal salt capable of reacting with the anions of said heat-stable salts, wherein said lean sorbent portion is introduced into the cathode compartment as the catholyte;

(b) withdrawing from said cathode a lean sorbent portion having less concentration of heat-stable salts than the lean sorbent portion entering said compartment,

(c) mixing the lower concentration heat-stable salt lean sorbent portion with the non-feed portion of lean sorbent stream and returning the combined streams to said gas conditioning; said anode compartment containing an anolyte aqueous solution,

(d) maintaining the concentration of ionized alkali metal in said anode compartment to neutralize said anions of said heat-stable salts in said lean sorbent portion.

Experimentation likewise has shown that an electrode coated with ruthenium oxide has the ability to operate at high current densities, but is not long-lived enough to be commercially viable under conditions normally found in the field, since the ruthenium is worn away in about 30 days.

The following data in Table 1, collected from laboratory experimentation, are typical of the aforementioned materials.

## Table 1

### Current Density $[A/ft^2]$ $(A/m^2)$

| Anode Material | 3V | 5V | 7V | 9V |
|---|---|---|---|---|
| Porous Graphite | 0 | 2.9 (31.2) | 20.1 (216.4) | 37.3 (401.5) |
| Nickel* | 33.4 (359.5) | 56.2 (605.0) | 78.6 (846.1) | 101.0 (1087.2) |
| Titanium | 2.4 (25.8) | 3.5 (37.7) | 4.7 (50.6) | 5.9 (63.5) |
| $RuO_2$/titanium* ** | 37.7 (405.8) | 49.5 (532.8) | 67.4 (725.5) | 85.7 (922.5) |

\* Nickel dissolved

\*\* The ruthenium coating wore away during field trials in less than 400 hours;

Iridium oxide on titanium was found to operate at high current densities and to be sufficiently long-lived to be commercially viable, having a life greater than 5000 hours of field trial operations. Similarly, tantalum is expected to give equivalent results when coated with iridium oxide. Platinum or a platinized electrode has likewise been found to have high current densities and dimensional stability.

Thus, the only metal or metal oxide coated anode materials found useful to date in this electrochemical process on a commercially viable scale are the platinum, platinized or iridium oxide coated stable anode materials. To prove the commercial viability of the discovery, a full scale gas treating plant had a side stream from the regenerator return line passed to a cell at a rate of about one gallon per minute (3.8 liters per min.). The absorbent side stream analyzed 3.53 percent heat-stable salts entering the cell and 3.18 percent leaving the cell, representing a 10 percent reduction in heat-stable salts.

The following examples demonstrate the improved and unexpected results achieved by employing electrochemical cells constructed in accordance with the present invention:

Comparative Example - Ni Anode

A series of laboratory experiments were run to collect data on cell construction material. The cell was approximately, 4 x 4 inches by 3 inches (10.2 cm x 10.2 cm x 7.6 cm). The cathode was a 3 x 3 x 1 inch (7.6 cm x 7.6 cm x 2.5 cm) piece of porous graphite and the anode was a 3 x 3 inch (7.6 cm x 6.6 cm) piece of expanded nickel. The anode compartment was separated from the cathode compartment by an anion exchange membrane, Ionics, Inc. 103 PZL-386. The catholyte solution was prepared by mixing 5.95 g. of methyldiethanolamine with 2.61 g of 88 percent formic acid in 500 ml of water. The initial pH was 4.89. The anolyte solution was 500 ml of a 0.10 M aqueous solution of NaCl. The catholyte was pumped through the porous graphite cathode at a rate of 300 ml/min. A D.C. power supply was connected across the electrodes and the current density was measured. In the first control experiment the anolyte and catholyte was analyzed for formic acid content. This data is set forth in Table 2 resulting from a control run employing an expanded nickel anode.

## Table 2

| Time (h) | ppm Formate | |
| --- | --- | --- |
| | Anolyte | Catholyte |
| 0.00 | 0 | 3892 |
| 0.50 | 538 | 3332 |
| 1.03 | 1347 | 2737 |
| 1.70 | 1904 | 2184 |
| 2.53 | 2618 | 1575 |
| 3.45 | 3224 | 933 |
| 4.45 | 3649 | 612 |

The final pH of the catholyte was 10.34. The nickel anode was partially dissolved.

The results set forth in Table 1 above were obtained employing the same cell, changing only the cathode material and using 0.5 M sodium carbonate in both electrode compartments. Table 1 and Table 2 demonstrate that nickel is capable of operating at high current density and removing heat-stable salts.

However, Ni is unsuitable as an anode in this system because it is soluble in the anolyte.

Comparative Field Test Run 1, Stainless Steel Anodes

A treating unit was constructed of four cathode compartments and three anode compartments each separated from the other by the Ionics anion membrane. The cathodes in each cathode compartment were 14 x 14 inches (35.6 cm x 35.6 cm) square expanded nickel sheets. The anodes were 316-type stainless steel punched plate. The electrodes were connected in parallel. Lean methyldiethanolamine (MDEA) at 120°C and 200 psig (1.48 MPa) was filtered and metered to the treating unit cathode compartments. The anolyte solution was originally a 10 percent sodium carbonate solution which was circulated through the anode compartments. The pH of the anolyte was maintained between about 8 and 11 by periodic additions of 15 percent aqueous sodium hydroxide. The volume of the anolyte solution was maintained constant. The following table sets forth the results:

Table 3

| Run Time (h) | Current (A) | Voltage | Amine Flow [GPM] (liters/min.) | HHS* (Wt. %) in | HHS* (Wt. %) out | MDEA Regen [#/h] (Kg/h) |
|---|---|---|---|---|---|---|
| 0.5 | 320 | 5.8 | 1.0 (3.79) | 4.86 | 4.43 | 2.52 (1.15) |
| 5.0 | 480 | 9.9 | 1.1 (4.16) | 4.73 | 4.36 | 2.11 (0.96) |
| 17.5 | 391 | 16.2 | 1.1 (4.16) | 4.67 | 4.35 | 1.83 (0.83) |
| 20.5 | 338 | 19.8 | 1.3 (4.92) | 3.92 | 3.69 | 1.55 (0.70) |

*HHS heat stable salts

Although the heat-stable salts were sufficiently removed to regenerate the MDEA, the stainless steel anodes proved to be a failure since the anodes completely corroded in 20.5 hours.

Run 2: Ruthenium Oxide Coated Anodes

A treating unit was constructed of four cathode compartments and three anode compartments each separated from the other by an Ionics anion membrane. The cathodes in each cathode compartment were 14 x 14 inches (35.6 cm x 35.6 cm) square expanded nickel sheets. The anodes were ruthenium oxide coated expanded nickel sheets. The electrodes were connected in parallel. Lean methyldiethanolamine at 120°C and 200 psig (1.48 MPa) was filtered and metered to the treating unit cathode compartments. The anolyte solution was originally a 10 percent sodium carbonate solution which was circulated through the anode compartments. The pH of the anolyte was maintained between about 8 and 11 by periodic additions of 15 percent aqueous sodium hydroxide. The volume of the anolyte solution was maintained constant. The following table sets forth the results:

Table 4

| Run Time [h] | Current [A] | Voltage | Amine Flow [GPM] (liters/min.) | HHS (Wt. %) in | HHS (Wt. %) out | MDEA Regen [# h] (kg/h) |
|---|---|---|---|---|---|---|
| 0.5 | 363 | 7.58 | 1.0 (3.79) | 3.5 | 3.1 | 2.07 (0.94) |
| 48 | 495 | 9.18 | 1.7 (6.43) | | | |
| 61 | 500 | 9.26 | 0.8 (3.03) | 3.24 | 3.17 | 0.29 (0.13) |
| 78.5 | 500 | 9.31 | 0.9 (3.41) | 3.5 | 3.3 | 0.93 (0.42) |
| 92 | 310 | 7.81 | 0.9 (3.41) | | | |
| 95 | 300 | 5.80 | 1.3 (4.92) | 3.17 | 3.01 | 1.08 (0.49) |
| 181 | 300 | 5.69 | 1.3 (4.92) | 3.36 | 3.13 | 1.55 (0.70) |
| 288 | 405 | 6.46 | 1.3 (4.92) | 3.1 | 3.0 | 0.67 (0.30) |
| 290 | 405 | 7.78 | 0.7 (2.65) | 3.0 | 2.6 | 1.45 (0.66) |
| 292.5 | 450 | 7.13 | 0.9 (3.41) | 3.0 | 2.6 | 1.87 (0.85) |
| 388 | cell shut down, voltage exceeded 20 volts at 10 amps. | | | | | |

Anode analysis with electron microscopy showed all the ruthenium oxide coating had worn off after only 388 hours. This field trial illustrated that while ruthenium oxide coating of the anode material gave positive results, the coating was not a satisfactory coating for extended use such as required in the environment of gas conditioning.

Example 1 - Iridium Oxide Anodes

The replacement of the anode electrodes of the cell of Runs 1 and 2 with iridium oxide coated expanded titanium sheets was then field tested and proved to be a satisfactory performer under the use environment. The data collected from this field trial is set forth in Table 5.

Table 5

| Run Time [h] | Current [A] | Voltage | Amine Flow [GPM] (liters/min) | HSS* (Wt %) In | HSS* (Wt %) Out | MDEA Regen [#/h] (kg/h) |
|---|---|---|---|---|---|---|
| 1 | 360 | 4.8 | 1.13 (4.28) | 5.3 | 5.2 | 0.59 (0.27) |
| 22.5 | 360 | 4.7 | 1.31 (4.96) | 5.9 | 4.9 | 6.79 (3.09) |
| 42 | 480 | 5.62 | 1.31 (4.96) | 5.7 | 5.1 | 4.07 (1.85) |
| 67 | 180 | 4.35 | 0.87 (3.29) | | | |
| 169 | 405 | 5.3 | 1.13 (4.28) | 5.29 | 4.94 | 2.05 (0.93) |
| 211 | 400 | 4.82 | 1.22 (4.62) | 4.63 | 4.56 | 0.44 (0.20) |
| 255 | 400 | 4.65 | 1.18 (4.47) | 4.67 | 4.29 | 2.32 (1.05) |
| 284 | 400 | 4.42 | 1.18 (4.47) | 4.64 | 4.29 | 2.14 (0.97) |
| 308 | 400 | | 1.15 (4.35) | 4.37 | 3.96 | 2.44 (1.11) |
| 332 | 402 | 4.85 | 1.13 (4.28) | 4.78 | 4.57 | 1.23 (0.56) |
| 356 | 405 | 4.26 | 1.22 (4.62) | 4.72 | 4.67 | 0.32 (0.15) |
| 380 | 405 | 4.28 | 1.09 (4.13) | | | |
| 404 | 410 | 4.2 | 1.00 (3.79) | 5.34 | 4.76 | 3.01 (1.37) |

Table 5 (continued)

| Run Time [h] | Current [A] | Voltage | Amine Flow [GPMS] (liters/min) | HSS* (Wt. %) In | HSS* (Wt. %) Out | MDEA Regen [#/h] (kg/h) |
|---|---|---|---|---|---|---|
| 428 | 400 | 4.25 | 1.13 (4.28) | 4.55 | 4.47 | 0.47 (0.21) |
| 452 | " | 4.3 | 1.13 (4.28) | 4.97 | 4.65 | 1.87 (0.85) |
| 476 | " | 4.28 | 1.09 (4.13) | 4.84 | 3.83 | 5.71 (2.60) |
| 500 | " | 4.14 | 1.09 (4.13) | 5.20 | 4.88 | 1.81 (0.82) |
| 524 | " | 4.31 | 1.09 (4.13) | 5.18 | 4.47 | 4.01 (1.82) |
| 572 | " | 4.36 | 1.31 (4.96) | | | |
| 620 | " | 4.3 | 1.09 (4.13) | 5.07 | 4.56 | 2.88 (1.31) |
| 668 | " | 4.8 | 1.00 (3.79) | 4.74 | 4.57 | 1.04 (0.47) |
| 692 | 390 | 4.5 | 1.09 (4.13) | 4.71 | 4.57 | 0.79 (0.36) |
| 740 | 400 | 4.9 | 1.09 (4.13) | 4.92 | 4.81 | 0.62 (0.28) |
| 788 | " | 4.5 | 1.18 (4.47) | 5.35 | 5.12 | 1.41 (0.64) |
| 812 | " | — | 1.09 (4.13) | 4.99 | 4.77 | 1.24 (0.56) |

*HSS heat stable salts

analysis of the anode by microscopy at 700 hours showed less than 5 percent loss of coating. To date the cells have been operated over 5000 hours with no appreciable change in results.

Example 2 - Platinized Anode

A cell is divided into an anode and cathode compartment by an anion exchange membrane, Ionics, Inc. 103 PZL-386. The cathode is porous graphite and the anode is a platinized expanded titanium sheet. The catholyte solution, 5.95 g of methyldiethanolamine and 2.61 g. of 88 percent formic acid in 500 ml of water, initial pH of about 4.89, is pumped through the porous graphite cathode at a rate of about 300 ml/min. The anolyte solution, consisting of 500 ml of a 0.10 M aqueous solution of NaCl, is fed to the anode compartment. A D.C power supply, connected across the electrodes, provides the power to the cell. Such a cell operated at economically attractive current densities and provided a commercially viable process for converting the heat-stable salts of alkanolamines formed in the thermal regenerator of a conventional gas conditioning process to the free amine which can be recycled to the gas conditioning process.

## Claims

1.  A process for removing heat-stable alkanolamine salts from an alkanolamine sorbent employed in gas conditioning for the removal acid gases a gas stream wherein the said heat-stable salts alkanolamines are formed during thermal regeneration of said alkanolamine sorbent, said process comprising:
    (a) feeding the lean regenerated amine sorbent solution produced in the thermal regeneration step said gas conditioning process, to the cathode compartment of at least one electrochemical cell, as the catholyte; the cell comprising a container, separated by a anion exchange membrane into a cathode compartment, having an electroconductive expanded metal plate cathode connected to a power source and an anode compartment, having an anode similarly connected to a power source, wherein said anode is a platinum coated, platinized or iridium oxide coated electrically conductive metal, said anode compartment containing an aqueous anolyte solution of an alkali metal salt capable of reacting with the anions of said heat-stable salts, and
    (b) withdrawing from said cathode compartment a lean sorbent having less concentration of heat-stable salts than the lean sorbent entering said compartment.

2.  A process as claimed in Claim 1 wherein said anode is platinized or iridium oxide coated titanium or tantalum.

3.  A process of Claim 1 wherein the anode is iridium oxide coated expanded titanium.

4.  The process of Claim 1 wherein the anode is titanium or tantalum coated with iridium oxide, and the cathode is nickel.

5.  A process as claimed in any one of the preceding claims, wherein only a portion of the said lean regenerated amine sorbent solution is fed to the said cathode compartement, and including the step of mixing the lower concentration heat-stable salt lean sorbent portion with a non-feed portion of lean sorbent stream and returning the combined streams to said gas conditioning.

6.  A process as claimed in any one of the preceding claims including the step of maintaining the concentration of ionized alkali metal in said anode compartment to neutralize said anions of said heat-stable salts in said lean sorbent portion.

7.  A process as claimed in Claim 6, wherein the said maintaining is carried out by discarding a portion of said anolyte; and
    adding make up volumes of anolyte to said anode compartment to maintain said neutralization concentration.

## Patentansprüche

1.  Verfahren zur Entfernung hitzestabiler Alkanolaminsalze aus einem Alkanolaminsorbens, das bei der Gaskonditionierung zur Entfernung von sauren Gasen aus einem Gasstrom verwendet wird, worin die hitzestabilen Alkanolaminsalze bei der thermischen Regenerierung des Alkanolaminsorbens gebildet werden, wobei das Verfahren umfaßt:
    (a) Einbringen der mageren regenerierten Aminsorbenslösung, die beim thermischen Regenerierungsschritt des Gaskonditionierungsprozesses erzeugt wird, in das Kathodenabteil von mindestens einer elektrochemischen Zelle als Katholyt, wobei die Zelle einen Behälter umfaßt, der durch eine Anionenaustauschermembran in ein Kathodenabteil mit einer elektrisch leitfähigen Streckmetallplattenkathode, die an eine Stromquelle angeschlossen ist, und ein Anodenabteil mit einer auf ähnliche Weise an eine Stromquelle angeschlossenen Anode getrennt wird, worin die Anode ein platinbeschichtetes, platiniertes oder iridiumoxidbeschichtetes elektrisch leitfähiges Metall ist, wobei das Anodenabteil eine wäßrige Anolytenlösung eines Alkalimetallsalzes enthält, das mit den Anionen der hitzestabilen Salze reagieren kann, und

(b) Entfernen eines mageren Sorbens, das eine geringere Konzentration an hitzestabilen Salzen als das in das Abteil eintretende magere Sorbens aufweist, aus dem Kathodenabteil.

2. Verfahren nach Anspruch 1, worin die Anode platiniertes oder iridiumoxidbeschichtetes Titan oder Tantal ist.

3. Verfahren nach Anspruch 1, worin die Anode iridiumoxidbeschichtetes Titanblech ist.

4. Verfahren nach Anspruch 1, worin die Anode mit iridiumoxidbeschichtetes Titan oder Tantal ist und die Kathode Nickel ist.

5. Verfahren nach einem der vorhergehenden Ansprüche, worin nur ein Anteil der mageren regenerierten Aminsorbenslösung in das Kathodenabteil eingebracht wird, und umfassend den Schritt des Vermischens des Anteils des mageren Sorbens mit der geringeren Konzentration an hitzestabilem Salz mit einem nicht eingebrachten Anteil eines mageren Sorbensstroms und des Rückführens der vereinigten Ströme zur Gaskonditionierung.

6. Verfahren nach einem der vorhergehenden Ansprüche, umfassend den Schritt des Aufrechterhaltens der Konzentration an ionischem Alkalimetall im Anodenabteil, um die Anionen der hitzestabilen Salze im Anteil des mageren Sorbens zu neutralisieren.

7. Verfahren nach Anspruch 6, worin das Aufrechterhalten durch Verwerfen eines Anteils des Anolyten und der Zufuhr von Ergänzungsvolumina des Anolyten zum Anodenabteil durchgeführt wird, um die Neutralisierungskonzentration aufrechtzuerhalten.

## Revendications

1. Procédé d'élimination de sels d'alcanolamine, stables à chaud, d'un absorbant alcanolamine utilisé dans le traitement de gaz pour l'élimination de gaz acides d'un courant gazeux, lesdits sels d'alcanolamine, stables à chaud, étant formés pendant la régénération thermique dudit absorbant alcanolamine, ledit procédé comprenant :

(a) l'introduction dans le compartiment cathodique d'au moins une cellule électrochimique, de la solution d'absorbant amine régénéré pauvre, produite dans l'étape de régénération thermique dudit procédé de traitement de gaz, ladite solution jouant le rôle de catholyte, la cellule comprenant un récipient séparé par une membrane échangeuse d'anions en un compartiment cathodique, ayant une cathode constituée d'une plaque de métal déployé électro-conductrice, reliée à une source de courant, et en un compartiment anodique, ayant une anode également reliée à une source de courant, ladite anode étant constituée d'un métal électriquement conducteur, revêtu de platine, platiné ou revêtu d'oxyde d'iridium, ledit compartiment anodique renfermant un anolyte constitué d'une solution aqueuse d'un sel de métal alcalin capable de réagir avec les anions desdits sels stables à chaud, et

(b) le prélèvement, à partir dudit compartiment cathodique, d'un absorbant pauvre ayant une concentration de sels stables à chaud inférieure à celle de l'absorbant pauvre entrant dans ledit compartiment.

2. Procédé selon la revendication 1, dans lequel ladite anode est constitué de titane ou de tantale, platiné ou revêtu d'oxyde d'iridium.

3. Procédé selon la revendication 1, dans lequel l'anode est constituée de titane déployé revêtu d'oxyde d'iridium.

4. Procédé selon la revendication 1, dans lequel l'anode est constituée de titane ou de tantale, revêtu d'oxyde d'iridium, et la cathode est constituée de nickel.

5. Procédé selon l'une quelconque des revendications précédentes, dans lequel on introduit dans ledit compartiment cathodique seulement une partie de ladite solution d'absorbant amine régénéré pauvre, le procédé comprenant l'étape de mélange de la partie absorbant pauvre, ayant une concentration plus faible de sel stable à chaud, avec une partie, n'ayant pas servi à l'alimentation, du courant d'absorbant pauvre, et le retour des courants combinés à ladite installation de traitement de gaz.

6. Procédé selon l'une quelconque des revendications précédentes, comprenant l'étape de maintien de la concentration de métal alcalin ionisé dans ledit compartiment anodique, pour neutraliser lesdits anions desdits sels stables à chauds dans ladite partie d'absorbant pauvre.

7. Procédé selon la revendication 6, dans lequel on réalise ledit maintien en rejetant une partie dudit anolyte et en ajoutant des volumes complémentaires d'anolyte audit compartiment anodique, pour maintenir ladite concentration de neutralisation.